# DEMANDE DE BREVET EUROPEEN

(11) **EP 1 111 889 A2**
(43) Date de publication de la demande: **27.06.2001**
(21) Numéro de dépôt: 00403519.2
(22) Date de dépôt: 14.12.2000
(51) Int. Cl.: H04M 3/44, H04M 3/424

(54) **Procédé de numérotation téléphonique automatique avec un téléphone mobile ainsi que centre serveur et terminal de radiocommunications pour la mise en oeuvre du procédé**

(30) Priorité: 16.12.1999 FR 9915867
(71) Demandeur: ALCATEL, 75008 Paris (FR)
(72) Inventeur: Massy, Christian, 92310 Sevres (FR); Guirauton, Alain, 95100 Argenteuil (FR)
(74) Mandataire: Lamoureux, Bernard

(57) **Abrégé**

Pour résoudre un problème de reconnaissance (15, 20) vocale de noms d'interlocuteurs émis par un utilisateur avec son téléphone mobile (1), on prévoit de faire intervenir un système de reconnaissance de parole à intelligence répartie. Un serveur (16) de reconnaissance de parole, très puissant, disponible pour une collectivité d'utilisateurs dans les services de commutation d'un opérateur de téléphonie mobile effectue cette reconnaissance, ou une partie de cette reconnaissance. Pour réduire alors les temps de trafic entre le téléphone mobile et ce serveur on prévoit que ces communications de reconnaissance de parole sont émises en mode GPRS (25, 26).

## Description

La présente invention a pour objet un procédé d'appel avec un téléphone mobile ainsi qu'un téléphone mobile et un centre serveur utilisable pour mettre en oeuvre ce procédé. L'invention est plus particulièrement destinée à la reconnaissance vocale d'un nom d'un interlocuteur appelé ou d'une commande émise, et à la composition automatique d'un numéro de téléphone correspondant au nom d'un interlocuteur appelé reconnu, ou de l'action associée à la commande émise.

Dans le domaine de la téléphonie mobile, notamment dans la téléphonie mobile de type GSM, Global System for Mobile-Système Global de Téléphonie mobile, du fait de la numérisation de la voix par des vocodeurs, CODEC, il a été très tôt envisagé d'utiliser des moyens déjà disponibles dans les téléphones mobiles pour provoquer une composition automatique de numéros d'appel. En théorie, un utilisateur appuie sur une touche spéciale du clavier de son téléphone mobile en même temps qu'il prononce le nom d'un interlocuteur qu'il veut appeler. Après relâchement de la touche, ou après une temporisation, un microprocesseur du téléphone mobile met en oeuvre un programme de reconnaissance vocale. Le programme de reconnaissance fait correspondre à une chaîne binaire numérisée représentant un signal de parole une chaîne binaire attendue représentant un nom d'une personne à appeler. Puis à partir de cette chaîne binaire reconnue, utilisée comme adresse, ce microprocesseur prélève dans une table d'annuaire un numéro de téléphone correspondant à cette personne à appeler. Enfin, le téléphone mobile compose automatiquement le numéro de téléphone correspondant. En pratique toutefois, une telle procédure n'aboutit pas efficacement. Soit le téléphone mobile est incapable de produire une chaîne binaire attendue correspondant à un quelconque numéro contenu dans sa mémoire, soit il en reconnaît une qui n'est pas la bonne. La raison de ces défauts de reconnaissance est à rechercher dans l'algorithme de reconnaissance mis en oeuvre dans le programme de reconnaissance. En effet du fait de son exiguïté, et par ailleurs de ses limites d'énergie disponible, un microprocesseur de téléphone mobile n'est capable de mettre en oeuvre qu'un algorithme de reconnaissance vocale simplifié.

Compte tenu de cette difficulté, il a été imaginé de faire partager la tâche de reconnaissance vocale en partie par le téléphone mobile et en partie par un centre serveur de reconnaissance vocale, accessible par le téléphone mobile. Eventuellement toute la charge de reconnaissance vocale peut-être assurée par un tel centre serveur. Par exemple, le document US-A-5 297 183 préconise une architecture répartie avec laquelle, dans le centre serveur, un processeur très puissant et très rapide est capable de produire un signal de reconnaissance bien plus exact et mieux utilisable ou interprétable par le téléphone mobile. Une norme DSR, Distributed Speech Recognition-Reconnaissance Vocale Distribuée, est même en cours de discussion pour établir certains aspects de cette reconnaissance : type de codage de paroles, type de distribution des fonctions de reconnaissance réalisées à la fois par le téléphone mobile et par le centre serveur de reconnaissance, formatage des données produites ou à reconnaître et ainsi de suite. En outre, dans le document cité, il est évoqué la nécessité d'effectuer une reconnaissance qui soit, d'une part, dépendante du locuteur et qui soit, d'autre part, indépendante du locuteur. Les développements réalisés dans ce domaine aboutissent à un résultat très acceptable de la reconnaissance.

Il reste toutefois un inconvénient. En effet les échanges entre le téléphone mobile et le centre serveur ont une durée trop longue. On peut estimer ainsi qu'une telle reconnaissance a une durée sensiblement égale, voire supérieure, à dix secondes. C'est trop long. De plus, au-delà de l'attente supportée par l'appelant, il faut ajouter un inconvénient de prix lié à la durée d'utilisation d'un canal hertzien. Le coût d'une composition automatique avec un tel système conduit alors, en elle-même, à être du même ordre que le coût d'une communication locale sur un réseau téléphonique commuté. Ce coût est excessif et gène la généralisation de son usage.

Dans l'invention on a constaté que la durée trop longue de mise à disposition du nom reconnu est essentiellement liée au procédé de prise de ligne mis en oeuvre en téléphonie mobile, notamment en téléphonie mobile de type GSM. Aussi, pour remédier à ce problème, plutôt que d'utiliser pour la liaison téléphone mobile-centre serveur de reconnaissance un mode de connexion de type privé classique qui est un fonctionnement en mode circuit, on utilisera dans l'invention un mode de transmission par paquets, et de préférence un mode de transmission par paquets non connecté. En effet, en résumé, un protocole de connexion GSM comporte deux parties : premièrement l'établissement d'un circuit et deuxièmement un trafic sur un circuit établi. Sur un circuit établi l'utilisateur dispose d'un débit maximal, qu'il peut utiliser ou non. Le paiement du service est conditionné par la durée de mise à disposition du circuit. Ceci signifie en particulier qu'un utilisateur paye même lorsque lui ou son interlocuteur sont silencieux, de part et d'autre de la ligne.

Dans un mode de transmission par paquets, schématiquement, on peut admettre qu'un circuit n'est pas préférentiellement mis en place entre un appelant et un centre serveur (et entre l'appelé et ce centre serveur). Au contraire, un appelant produit des paquets d'informations agrémentés chacun de l'adresse de l'appelé, leur destinataire. Le débit d'information utile est globalement réduit du fait de la présence, dans les paquets émis, de cette adresse, ainsi qu'en général d'un numéro de paquet. Mais le mode de transmission est plus avantageux en ce sens que le mode de facturation est plus réaliste. Il correspond exactement à l'occupation du média de transmission, au prorata des paquets transmis. Dans ce cas l'utilisateur ne paye que les paquets transmis. L'utilisateur ne paye rien s'il ne transmet rien, même s'il reste connecté. De ce fait, on crée pour le téléphone mobile une possibilité d'être tout le temps connecté, ce qui ne coûte rien, mais qui évite la perte de temps de prise de ligne.

L'idée de l'invention est alors, pour la reconnaissance complète d'un nom appelé ou d'une commande à émettre, d'utiliser entre le téléphone mobile et le serveur, dans le sens montant et/ou dans le sens descendant, et de préférence dans les deux sens, un mode de transmission par paquets, de préférence un mode de transmission par paquet dit non connecté. En particulier dans le domaine du GSM, une norme dite GPRS utilisable pour transporter des données peut être respectée pour l'envoi des paquets. Dans ce cas à l'émission, au départ du téléphone mobile, le nombre de paquets peut être réduit puisqu'il correspond sensiblement à une cinquantaine de paquets (pour une prononciation d'un nom d'environ une seconde de durée). En retour, le centre serveur transmet un signal de reconnaissance qui en outre peut être compressé, éventuellement sur un seul paquet à destination du téléphone mobile appelant.

L'invention n'a alors pas seulement pour effet que la durée d'utilisation effective du média est réduite, mais également le fait que la mise en connexion entre le téléphone mobile et le centre serveur et entre le serveur et le téléphone mobile est bien plus rapide. En effet du fait d'un mode de diffusion utilisable par paquets, opposable à un mode de communication privée avec mise en place d'un circuit, il n'y a pas de durée de latence d'établissement d'un circuit entre un téléphone mobile et le centre serveur, et réciproquement. On montrera alors qu'avec l'invention, la détermination du numéro de téléphone à composer peut être faite moins de deux secondes après la fin de la prononciation du nom de l'interlocuteur appelé, sans que par ailleurs la totalité de ces deux secondes soit facturable comme durée de transmission.

L'invention a donc pour objet un procédé d'appel avec un téléphone mobile caractérisé en ce que,
- on émet vocalement en direction d'un capteur acoustique du téléphone mobile un nom d'un interlocuteur à appeler, ou d'une commande à exécuter, et plus généralement d'une information vocale
- on transmet à un centre serveur un premier signal de parole numérisé correspondant à cette information vocale,
- le centre serveur contribue à la reconnaissance de cette information vocale et produit un premier signal de reconnaissance,
- le centre serveur transmet ce premier signal de reconnaissance au téléphone mobile, et
- le téléphone mobile interprète ce premier signal de reconnaissance et compose en correspondance un numéro de téléphone correspondant à l'interlocuteur à appeler, ou exécute la commande à exécuter,
- la transmission du premier signal de parole numérisé et ou du premier signal de reconnaissance étant effectuée en un mode de transmission par paquets.

Elle a également pour objet un téléphone mobile muni d'un capteur acoustique dans lequel on émet vocalement un nom d'un interlocuteur à appeler ou d'une commande à exécuter, d'un moyen de transmission à un centre serveur d'un premier signal de parole numérisé correspondant à une telle information émise vocalement, d'un moyen d'interprétation d'un premier signal de reconnaissance produit en retour par ce serveur et correspondant à ce premier signal de parole numérisé, et d'un moyen de composition automatique d'un numéro de téléphone correspondant à l'interlocuteur à appeler, ou d'un moyen d'exécution une commande caractérisé en ce qu'il comporte un moyen de transmission du premier signal de parole numérisé en un mode de transmission par paquets.

Elle a enfin pour objet un centre serveur muni de moyens pour recevoir un premier signal de parole numérisé, pour reconnaître vocalement une information émise vocalement en correspondance de ce premier signal de parole numérisé, pour produire un premier signal de reconnaissance, et pour transmettre ce premier signal de reconnaissance à un téléphone mobile, caractérisé en ce qu'il comporte des moyens pour transmettre ce premier signal de reconnaissance au téléphone mobile en un mode de transmission par paquets.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un système comportant un téléphone mobile et un centre serveur utilisable pour mettre en oeuvre le procédé de l'invention ;
- Figure 2 : une représentation schématique des étapes mises en oeuvre dans le procédé de l'invention ;
- Figure 3: un rappel des étapes d'établissement d'un circuit en téléphonie mobile classique, la durée d'établissement étant rédhibitoire ;
- Figure 4 : une représentation d'un perfectionnement du procédé de l'invention.

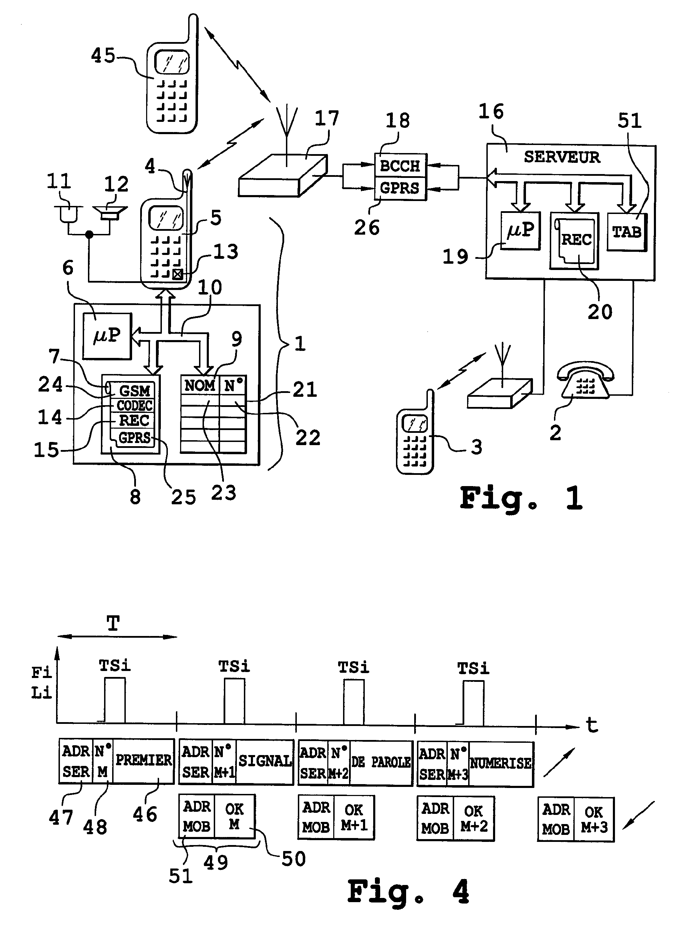

La figure 1 montre un système utilisable pour mettre en oeuvre le procédé de l'invention. Ce système comporte un téléphone mobile 1 avec lequel on veut joindre un interlocuteur, accessible par exemple par l'intermédiaire d'un combiné téléphonique 2 de type filaire ou d'un autre téléphone mobile 3. Le téléphone mobile 1 comporte d'une manière classique un ensemble de moyens radioélectriques 4 (symbolisés par une antenne) ainsi qu'un boîtier 5 muni d'une manière classique d'un écran et d'un clavier. Les moyens radioélectriques 4 sont pilotés par un microprocesseur 6, qui met en oeuvre un programme 7 contenu dans une mémoire programme 8. Une mémoire de donnée 9 est reliée par un bus 10 au microprocesseur 6 à la mémoire 8 ainsi qu'à tous les organes du boîtier 5. Parmi les organes radioélectriques et de diffusion de la parole figurent des moyens acoustiques symboliquement représentés par un microphone 11 et un haut-parleur 12.

Selon ce qui a été indiqué précédemment, il est connu d'émettre vocalement en direction du capteur acoustique, du microphone 11, un nom d'un interlocuteur à appeler. D'une manière classique cet appel est effectué en appuyant simultanément ou préalablement sur une touche spéciale 13 (ou sur une combinaison de touches du clavier du boîtier 1). Le programme 7 comporte un sous-programme CODEC 14 de codage numérique de la parole reçue par le microphone 11. Ce codage de parole peut par ailleurs être mis en oeuvre par le microprocesseur 6 (ou par un microprocesseur spécialisé) de concert avec un sous-programme REC 15 de reconnaissance de parole. De cette façon le téléphone mobile produit un premier signal de parole numérisé. Cette reconnaissance étant insuffisante, elle est complétée par une reconnaissance plus puissante effectuée par un centre serveur 16.

Le téléphone mobile est relié au centre serveur 16 par l'intermédiaire d'une station de base comportant des circuits 17 d'émission réception radioélectrique, et des circuits dits BCCH 18 de commande et de contrôle des circuits 17. L'appui sur la touche 13 provoque l'appel par voie hertzienne du centre serveur 16. Le centre serveur 16 comporte un processeur 19, très puissant capable de mettre en oeuvre un programme 20 très performant de reconnaissance de la parole. Le programme 20 est par exemple du type de celui décrit dans le document cité ci-dessus. Le programme 20 comporte in fine le renvoi au téléphone mobile 1 d'un premier signal de reconnaissance correspondant au signal de parole numérisé.

Dans le téléphone mobile 1 ce premier signal de reconnaissance est interprété. Par exemple, une opération complémentaire de reconnaissance, correspondant au locuteur est effectuée à ce moment. Surtout le programme 15 comporte une interprétation, c'est-à-dire un prélèvement dans une mémoire 9 d'un numéro de téléphone présent dans une zone 20 d'un enregistrement 21 de cette mémoire 9, en correspondance d'une zone 22 correspondant au signal de reconnaissance interprété. Puis le téléphone mobile 1 met en oeuvre avec le numéro de téléphone extrait de la zone 21 un programme 24, dit ici GSM symboliquement de prise de ligne et de composition du numéro de la zone 21 pour joindre un interlocuteur accessible par le combiné 2 ou le téléphone mobile 3.

Dans tout ce qui précède ou ce qui suit, on évoquera un appel d'un correspondant. Toutefois, au lieu du nom d'un appelé, il est possible de prononcer le nom d'une commande, par exemple "RENVOI D'APPEL" pour renvoyer tous les appels destinés au téléphone mobile sur un autre numéro convenu à l'avance. Dans ce cas, au lieu de provoquer la composition automatique d'un numéro, le procédé conduit à l'exécution d'une commande, ici de renvoi d'appel. Cette commande sera ainsi reconnue en partie par le téléphone mobile, en partie par le centre serveur. La commande reconnue par le centre serveur pourra même dans ce cas ne pas être renvoyée au téléphone mobile et être exécutée directement par le centre serveur. De préférence toutefois au moins un accusé de réception ou acquit sera envoyé en retour au téléphone mobile.

Si une commande reconnue est envoyée par le centre serveur au téléphone mobile, celui-ci disposera de préférence d'une possibilité d'accepter ou de refuser l'exécution de la commande à exécuter reconnue. Par exemple une indication "RENVOI D'APPEL ?" pourra apparaître sur l'écran du téléphone mobile. Si l'utilisateur l'accepte, il appuiera alors sur une touche du clavier pour provoquer l'exécution (par le téléphone mobile ou le centre serveur selon la nature de la commande). Si le centre serveur est impliqué par l'exécution, il y aura alors un troisième envoi de données, du téléphone mobile au centre serveur. Ce troisième envoi de données sera par exemple un signal d'acquit, positif ou négatif selon le besoin de l'utilisateur, lui aussi de préférence envoyé par paquets.

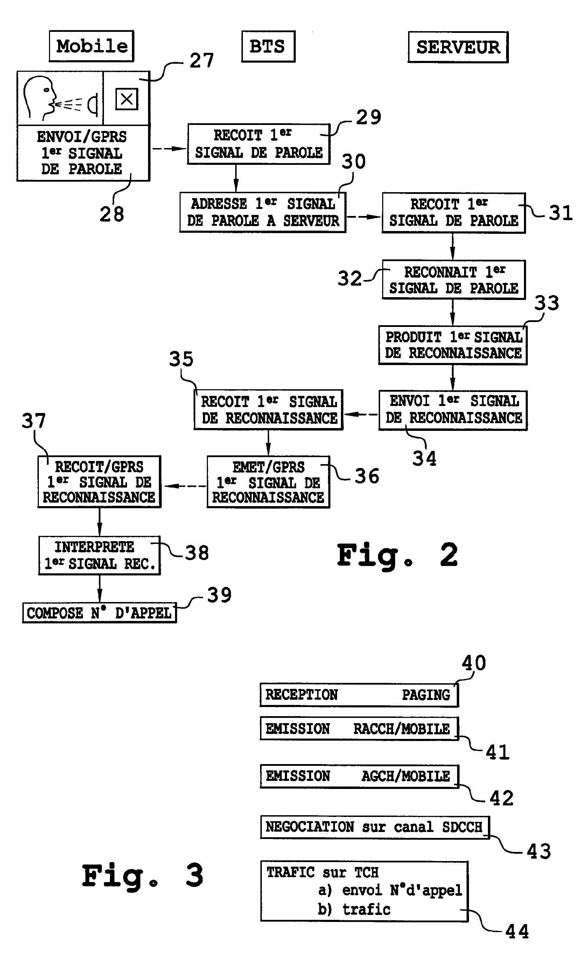

Selon une caractéristique essentielle de l'invention, toutes les étapes qui sont décrites ci-dessus et qui concernent le trafic entre le centre serveur 16 et le téléphone mobile 1 sont mises en oeuvre, dans le sens montant en utilisant un sous-programme 25 de transmission par paquets, et dans le sens descendant en utilisant des moyens 26 de transmission par paquet. Le sous-programme 25, GPRS, est mémorisé dans la mémoire 8. Les moyens 26 sont des circuits réalisés dans les circuits de commande 18 de la station de base. Ils peuvent aussi être en partie situés dans le centre serveur 16. Le mode de transmission par paquets retenu est bien entendu de préférence un mode GPRS, GSM Packet Radio System-Système de Transmission de Paquets Radio en GSM. Ainsi selon l'invention, figure 2, à une étape 27 d'émission vocale du nom d'un interlocuteur à appeler succède une étape 28 d'envoi du premier signal de parole numérisé au serveur 16. Cet envoi est fait en mode de transmission par paquets. Le sous-programme 25 formate à cet effet le premier signal de parole numérisé en paquets.

La station de base reçoit ce premier signal de parole numérisé. Elle décode dans les circuits 26 l'adresse du serveur 16 contenue dans les paquets reçus et envoie le signal de parole numérisé en correspondance au serveur 16 au cours d'une étape 30. Le serveur 16 reçoit le premier signal de parole numérisé qui lui est adressé au cours d'une étape 31. Au cours d'une étape 32, le serveur 16 effectue la reconnaissance de parole avec son processeur 19 qui met en oeuvre le programme 20. La durée de cette reconnaissance peut être très courte. Avec un microprocesseur 19 très puissant on peut prévoir qu'elle dure de l'ordre de 1 milliseconde. De ce fait le serveur 16 peut servir à de multiples appelants.

En correspondance au cours d'une étape 33, le serveur 16 produit un premier signal de reconnaissance et, pour ce qui concerne les appels, envoie ce premier signal de reconnaissance au cours d'une étape 34 à la station de base. La station de base reçoit au cours d'une étape 35 le premier signal de reconnaissance du serveur 16 et l'émet au cours d'une étape 36, à l'aide des circuits 26, en un mode de transmission par paquets, de préférence GPRS, à destination du téléphone mobile 1. Celui-ci reçoit le premier signal de reconnaissance au cours d'une étape 37. Il l'interprète au cours d'une étape 38 et compose enfin au cours d'une étape 39 le numéro d'appel correspondant à l'interlocuteur à appeler. S'il ne s'agit pas d'un appel mais d'une commande, le trajet retour du signal de reconnaissance peut être omis.

La particularité de l'invention se trouve donc dans l'emploi du programme 25 et dans l'emploi, dans les circuits BCCH 18, des circuits 26 de type GPRS utilisables pour mettre en oeuvre une transmission en mode paquets, notamment selon la norme GPRS.

La figure 3 montre la composition du numéro d'appel correspondant à l'étape 39. Cette figure permettra de mieux mettre en évidence la lenteur, et le coût d'occupation, des circuits établis en téléphonie mobile dans l'état de la technique d'une part et, par opposition, la rapidité et la réduction de coût dans l'invention d'autre part. Dans un mode de connexion de type circuit, un téléphone mobile qui est en veille et qui est appelé reçoit au cours d'une étape 40 un signal dit de paging par lequel la station de base signale au mobile qu'il est appelé. Il est possible que le mobile soit en arrêt. Dans ce cas, bien entendu le téléphone mobile 1 n'émet aucun signal en réponse. Si le téléphone mobile 1 est disponible et en veille, il émet au cours d'une étape 41 à destination de la station de base un signal dit RACCH signalant d'une part qu'il est accessible et d'autre part qu'il souhaite une connexion réseau pour recevoir l'appel. Dans le cas d'un appel entrant, l'étape 40 se produit au départ. Dans le cas d'un appel sortant la première étape est l'étape 41. Les étapes 40 et 41 utilisent un canal de balise de la station de base.

La station de base reçoit alors la demande de connexion au réseau de l'étape 41 et, au cours d'une étape 42, transmet au mobile des références d'un canal de négociation. Le canal de négociation n'est pas le canal de trafic. Il est un canal provisoire sur lequel la station de base et les téléphones mobiles, au cours d'une étape 43 se mettent d'accord sur toutes les contraintes pesant sur la transmission et sur la définition d'un canal de trafic : loi de fréquence, synchronisation, puissance, fenêtre temporelle, débit transmissible, et ainsi de suite. Une fois que cette négociation 43 est menée à terme, le trafic proprement dit peut s'établir au cours d'une étape 44. C'est seulement au cours de l'étape 44, sur un canal de trafic TCH, que le téléphone mobile, dans le cas d'un appel, envoie premièrement le numéro d'appel et deuxièmement réalise son trafic. Dans l'état de la technique, au début de l'étape 44 la reconnaissance vocale n'avait pas encore commencé, le premier interlocuteur appelé par le bouton 13 est justement le centre serveur 16.

Dans l'état de la technique pour que le téléphone mobile 1 puisse joindre le serveur 16 parce que celui-ci effectue la reconnaissance, il fallait donc mettre en oeuvre les étapes 41 à 43. L'inconvénient de l'échange réalisé par les étapes 41 à 43 est qu'il est lent et que par ailleurs il est facturé à l'utilisateur. A l'opposé, dans le mode dit GPRS, et plus généralement dans un mode par paquets, les étapes 41 à 43 ou leur équivalent sont réalisées une fois pour toutes, lorsque le téléphone est mis en service, par exemple lorsque l'utilisateur, le matin, commute son téléphone mobile.

En mode par paquets, en mode GPRS, toutefois le canal alloué n'est pas un canal dédié, utilisable en mode de circuit exclusivement entre le téléphone mobile 1 et la station de base 17. Au contraire, il est un canal partagé entre le téléphone mobile 1 et d'autres téléphones mobiles tels que 45, également en relation avec la station de base 17. En conséquence, ces étapes 41 à 43, lors de l'appui sur la touche spéciale 13 n'ont pas besoin d'être lancées.

La figure 4 montre d'une manière schématique les caractéristiques d'une transmission par paquets, par exemple selon le mode GPRS. Dans ce mode, les téléphones mobiles qui sont en veille sont informés, en permanence, de l'existence d'un canal de diffusion de type GPRS notamment caractérisé par une loi de fréquence Li, par une fréquence instantanée Fi de porteuse et par des fenêtres temporelles TSi d'utilisation (dans le cas d'une utilisation de type TDMA-Time Division Multiple Access-Accès Multiple à Répartition dans le Temps). Néanmoins, le mode GPRS ou par paquets de l'invention pourrait être également envisageable en mode CDMA-Coded Division Multiple Access-Accès Multiple à Répartition par Codage. La particularité de ce point de vue est que la négociation, similaire à l'étape 43, du canal de diffusion sur lequel seront distribués les paquets entre la station de base 17 et les différents téléphones mobiles 1 et 45, est constamment maintenue, ou mise à jour. Les téléphones mobiles en sont tous informés en permanence. Dans ce cas les téléphones mobiles 1 ou 45 ont à recevoir tous les paquets émis, et à les décoder tous pour extraire ceux qui les concernent. Ils repèrent ceux qui les concernent par extraction d'une adresse dans ces paquets qui correspond par exemple à un numéro IMSI de leur abonnement. Pour réduire la consommation du téléphone mobile 1, on peut toutefois prévoir que le décodage de ces adresses ne se réalisera que pendant une période consécutive à l'appui sur la touche 13.

Ces considérations amènent à faire une distinction entre un mode de transmission par paquets dit connecté et un mode de transmission par paquets dit non connecté. En mode de transmission par paquets, d'une manière générale, les téléphones mobiles sont connectés au sens où en permanence ils écoutent le réseau et où ils transmettent sur le réseau aléatoirement en fonction de leurs besoins. Dans le mode de transmission par paquets, option non connecté, le canal de diffusion des paquets est partagé, seuls des protocoles anticollision organisent le flux entre une station de base et les différents téléphones mobiles. Dans le mode de transmission par paquets, option connecté, il existe une hiérarchie de droits. Le téléphone mobile qui a choisi l'option connecté fait passer ses besoins avant ceux des autres téléphones mobiles. Ces autres téléphones mobiles ne peuvent utiliser le canal de diffusion de paquets que dans la mesure où ce canal n'est pas complètement occupé par le téléphone mobile qui a choisi l'option connecté. Dans l'option connecté, du fait de la priorité, le prix à payer est plus élevé : il peut être lié à la durée pendant laquelle le canal de diffusion est ainsi réservé. Dans l'option connecté, il y a aussi des étapes préalables de réservation du canal. Ces étapes de réservation sont similaires à l'étape 43, tout en étant de durée moins longue. De préférence, dans l'invention, le mode de transmission est alors un mode de transmission par paquets, option non connecté (donc sans réservation, et sans priorité). Par opposition, dans l'établissement d'un circuit dédié au moment d'une communication, la désignation du canal de trafic TCH (qui requiert des indications Fi, Li, TSi similaires) est définie au cours de l'étape 43.

La figure 4 montre l'envoi sous forme de paquets du premier signal de parole numérisé du téléphone mobile 1 à la station de base 17. Chaque paquet est schématiquement représenté comme envoyé pendant une fenêtre Tsi, dont le rang est i dans une trame T de n fenêtres (dans le mode préféré n vaut 8). Chaque paquet comporte une zone d'information 46 agrémentée d'une zone d'adresse 47 désignant ici le serveur 16. S'agissant de messages destinés au serveur 16 et plus précisément au microprocesseur 19 pour mettre en oeuvre le programme 20, l'adresse 47 est ajoutée automatiquement dans chacun des paquets, notamment par le programme 25, mis en oeuvre par le bouton 13. En outre, les paquets sont agrémentés d'une zone complémentaire 48 renseignant sur le numéro M+i du paquet, ce qui permet au circuit 26 de la station de base, voire au serveur 16, de les remettre dans l'ordre. Dans le sens descendant, un acquit est envoyé par le téléphone mobile 1 au centre serveur 16.

Compte tenu des aléas du canal de diffusion du mode GPRS, un paquet émis n'est pas nécessairement reçu. Dans l'invention, à titre de perfectionnement, on prévoit que le serveur 16, ou plutôt de préférence le circuit 26, renvoie au téléphone mobile 1 (en pratique à tous les téléphones mobiles qui sont sous sa couverture radioélectrique) un message d'acquit 49 comportant une zone d'acquit 50 désignant le ou les numéros de paquets reçus et une zone d'adresse 51 désignant celui des téléphones mobiles 1 ou 45 à informer de la réception correcte du ou des paquets émis. Si cette réception n'est pas reçue en temps utile, le programme 25 peut prévoir une réémission d'un paquet M qui n'aurait pas été reçu.

La figure 4 montre ainsi la définition du canal de type GPRS entre le téléphone mobile 1 et la station de base 17, dans le sens montant. Dans le sens descendant, notamment pour la transmission du premier signal de reconnaissance, une transmission par paquets du même type est mise en oeuvre. Cependant le nombre de paquets descendants peut être bien inférieur.

Eventuellement, il peut être prévu par la présence d'une table 51 présente dans le serveur 16 et dont l'équivalent est contenu dans la mémoire 9 du téléphone mobile 1, de coder les signaux de reconnaissance, par un codage de type phonétique ou autre, de manière à ce que la mémorisation en zone 23 corresponde à une codification phonétique propice d'une part à une bonne adéquation pour la recherche dans les zones 23 et d'autre part à une réduction de la quantité de bits envoyés. Par exemple, si on retient une codification de 256 phonèmes, chaque phonème peut être codé sur un octet. Dans ce cas, dans une seule fenêtre temporelle TSi, dans laquelle il est possible d'envoyer 141 bits utiles on peut envoyer jusqu'à 16 phonèmes pour représenter un nom. Ce mode de codage est un des modes de compression utilisable dans le sens descendant.

En fonction de l'architecture de reconnaissance répartie qui aura été retenue, il est aussi prévu que, pour la constitution de la mémoire 9, un utilisateur sélectionne une option supplémentaire avec le clavier du téléphone mobile. Dans une application correspondant à cette option supplémentaire, consécutivement à l'émission vocale d'un nom d'un interlocuteur, l'utilisateur compose au clavier le numéro de téléphone de cet interlocuteur. Ce numéro de téléphone est alors mémorisé en zone 21 alors que sera mémorisé son équivalent reconnu en zone 23, après émission et retour GPRS en provenance du serveur 16 et/ou transmission au serveur 16. En variante la mémoire 9 est contenue dans le serveur 16 et celui-ci renvoie dans le paquet de retour le numéro à appeler pour que le téléphone mobile 1 lance les étapes 41 à 44 avec ce numéro.

## Revendications

1. Procédé d'appel avec un téléphone mobile (1) caractérisé en ce que
- on émet (27) vocalement en direction d'un capteur acoustique (11) du téléphone mobile une information vocale représentant par exemple un nom d'un interlocuteur à appeler, ou d'une commande à exécuter
- on transmet (28) à un centre serveur (16) un premier signal de parole numérisé correspondant à cette information vocale,
- le centre serveur contribue (19, 20) à la reconnaissance vocale de cette information vocale et produit un premier signal de reconnaissance,
- le centre serveur transmet ce premier signal de reconnaissance au téléphone mobile, et
- le téléphone mobile interprète (15, 9) ce premier signal de reconnaissance et compose (39) en correspondance un numéro de téléphone correspondant à l'interlocuteur à appeler ou exécute la commande à exécuter,
- la transmission du premier signal de parole numérisé et ou du premier signal de reconnaissance étant effectuée en un mode (25, 26) de transmission par paquets.

2. Procédé selon la revendication 1, caractérisé en ce que
- la transmission du premier signal de parole numérisé et ou du premier signal de reconnaissance est effectuée en un mode de transmission par paquets non connecté.

3. Procédé selon l'une des revendications 1 à 2, caractérisé en ce que
- la transmission du premier signal de parole numérisé et ou du premier signal de reconnaissance est effectuée selon la norme GPRS.

4. Procédé selon l'une des revendications 1 à 3, caractérisé en ce que
- le centre serveur envoie un signal d'acquit (49) au téléphone mobile à la réception du premier signal de parole numérisé.

5. Procédé selon l'une des revendications 1 à 4, caractérisé en ce que
- le téléphone mobile envoie un signal d'acquit au centre serveur à la réception du premier signal de reconnaissance.

6. Procédé selon l'une des revendications 1 à 5, caractérisé en ce que
- le centre serveur réalise une reconnaissance du premier signal de parole qui est distribuée (15, 20) avec une reconnaissance du premier signal de parole ou du premier signal de reconnaissance réalisée dans le téléphone mobile.

7. Téléphone mobile caractérisé en ce qu'il comprend un capteur acoustique dans lequel on émet une information vocale représentant par exemple un nom d'un interlocuteur à appeler ou une commande à exécuter, d'un moyen de transmission à un centre serveur d'un premier signal de parole numérisé correspondant à cette information vocale, un moyen d'interprétation d'un premier signal de reconnaissance produit en retour par ce serveur et correspondant à ce premier signal de parole numérisé, un moyen de composition automatique d'un numéro de téléphone correspondant à un interlocuteur à appeler, ou un moyen d'exécution une commande à exécuter, et moyen de transmission du premier signal de parole numérisé en un mode de transmission par paquets.

8. Téléphone selon la revendication 7, caractérisé en ce que le mode de transmission par paquet est un mode GPRS.

9. Centre serveur muni de moyens pour recevoir un premier signal de parole numérisé, pour reconnaître vocalement une information émise vocalement en correspondance de ce premier signal de parole numérisé, pour produire un premier signal de reconnaissance, et pour transmettre ce premier signal de reconnaissance à un téléphone mobile, caractérisé en ce qu'il comporte des moyens pour transmettre ce premier signal de reconnaissance au téléphone mobile en un mode de transmission par paquets.

10. Centre serveur selon la revendication 9, caractérisé en ce que le mode de transmission par paquet est un mode GPRS.
